# EUROPÄISCHE PATENTSCHRIFT

(11) **EP 3 393 751 B1**
(45) Veröffentlichungstag und Bekanntmachung des Hinweises auf die Patenterteilung: **17.02.2021**
(21) Anmeldenummer: 16809800.2
(22) Anmeldetag: 12.12.2016
(51) Int. Cl.: B29C 48/695, B29C 48/05, B29C 48/345, B29C 48/92, B29C 48/255, B29B 9/06

(54) **EXTRUDER MIT UMLENKELEMENT ZUM GEZIELTEN ANSTRÖMEN VON LOCHPLATTENBEREICHEN**
EXTRUDER WITH DEFLECTOR ELEMENT FOR GUIDING THE MASS FLOW TO RESPECTIVE BREAKER PLATE SECTIONS
EXTRUDEUSE AVEC UN DÉFLECTEUR À GUIDER LE FLUX AUX SECTIONS RESPECTIVE DE LA PLAQUE DU FILTRE

(30) Priorität: 22.12.2015 DE 102015226512
(43) Veröffentlichungstag der Anmeldung: 31.10.2018
(73) Patentinhaber: BASF SE, 67056 Ludwigshafen am Rhein (DE)
(72) Erfinder: LOHSE, Andreas, 49448 Huede (DE)
(74) Vertreter: BASF IP Association
(86) Internationale Anmeldenummer: PCT/EP2016/080615
(87) Internationale Veröffentlichungsnummer: WO 2017/108475

(56) Entgegenhaltungen:
- DE-A1- 2 811 771
- GB-A- 2 093 720
- JP-A- H04 278 325
- JP-A- H04 278 325
- US-A- 5 045 254

## Beschreibung

Die Erfindung betrifft einen Extruder umfassend ein Gehäuse mit einem Strömungskanal für eine Schmelze sowie eine den Strömungskanal austrittsseitig begrenzende Lochplatte. Gattungsgemäße Extruder und Lochplatten sind aus der Literatur bekannt. So beschreibt das Dokument DE 35 32 937 A1 beispielsweise eine Lochplatte, die am austrittsseitigen Ende eines Extruders befestigt und für die Unterwassergranulierung von Kunststoffsträngen geeignet ist. Bei üblichen Produktionsprozessen, zum Beispiel zur Herstellung von Kunststoffgranulat, wird erhitztes Material wie Kunststoffschmelzen durch einen Strömungskanal im Gehäuse eines Extruders gefördert und am Austritt durch Öffnungen in der Lochplatte gepresst. Mit fortschreitendem Prozessverlauf bilden sich Ablagerungen und Anhaftungen in den Öffnungen der Lochplatte, bis schließlich die offenen Querschnitte derart verkleinert sind, dass die Lochplatte gereinigt oder ausgetauscht werden muss. Bei einer Reinigung im laufenden Betrieb geht damit unweigerlich ein Materialverlust einher. Beim Austausch der Lochplatte muss die Anlage abgestellt werden, was zu Ausfallzeiten und damit verbundenen Kapazitätsverlusten führt.

Um den Material- und Kapazitätsverlusten entgegenzuwirken sind Filtersiebe bekannt, die im Strömungsverlauf vor der Lochplatte im Inneren des Extruders auswechselbar eingesetzt sind. So offenbart das Dokument DE 30 13 038 A1 eine Siebwechselvorrichtung für Extruder zur kontinuierlichen Behandlung schmelzflüssiger Kunststoffe, bei der ein quer zum Strömungskanal der Schmelze verschiebbarer Wechselschieber in einer Aufnahmebohrung im Extrudergehäuse vorgesehen ist. Die Druckschrift JPH04278325 A offenbart eine Vorrichtung mit einem Querschieber stromaufwärts der Lochplatte, der mittels verschiedener Einsätze wahlweise das Anströmen eines Innen- oder Außenbereichs der Lochplatte ermöglicht.

In der Offenlegungsschrift DE 28 11 771 A1 wird eine Filtersiebwechselvorrichtung für einen Kunstharzextruder beschrieben, bei dem der Strömungsweg im Inneren des Extruders in zwei parallele Teilkanäle aufgeteilt ist. Vor dem Austritt aus dem Extruder sind die beiden Teilkanäle wieder zu einem Austrittskanal zusammengeführt. In jedem der beiden Teilkanäle befindet sich eine verschiebbare Platte, die je zur Hälfte massiv ohne Durchbrüche ausgeführt ist und die andere Hälfte eine Bohrung mit einem eingesetzten Filtersieb aufweist. Die Platten sind so geschaltet, dass im Betrieb jeweils ein Teilkanal durch den massiven Teil einer Platte abgesperrt ist, und die Kunststoffschmelze durch das im anderen Teilkanal befindliche Filtersieb fließt. Zum Reinigen der Filtersiebe werden die Stellungen der Platten getauscht, sodass danach der zuvor offene Kanal geschlossen ist und die Schmelze danach durch den zuvor geschlossenen Kanal fließt. Das verschmutzte Filtersieb befindet sich dann außerhalb des Extrudergehäuses und kann ausgetauscht oder gereinigt werden.

Es stellte sich die Aufgabe, einen gattungsgemäßen Extruder derart weiterzubilden, dass produktionsbedingte Materialverluste und Ausfallzeiten weiter als im Stand der Technik bekannt reduziert werden.

Diese Aufgabe wird erfindungsgemäß gelöst durch einen Extruder umfassend ein Gehäuse mit einem Strömungskanal für eine Schmelze sowie eine den Strömungskanal austrittsseitig begrenzende Lochplatte, wobei in Strömungsrichtung der Schmelze vor der Lochplatte ein Anströmelement mit Durchtrittsflächen und Abdeckflächen derart verschiebbar angeordnet ist, dass bei einer Verschiebung des Anströmelements eine erste Teilmenge von Löchern der Lochplatte freigegeben und eine zweite Teilmenge von Löchern der Lochplatte verschlossen werden, wobei die Abdeckflächen (5) in einer bevorzugten Ausführungsform radial vom Zentrum des Anströmelements (3) zu seinem Rand verlaufen.

Unter einer Lochplatte wird im Rahmen der Erfindung das Bauteil verstanden, aus dem die Schmelze den Extruder verlässt, bevor sie der weiteren Verarbeitung zugeführt wird. Gegebenenfalls im Inneren des Extruders vorhandene Filter- oder Siebvorrichtungen sind keine "Lochplatten" im Sinne der Erfindung.

Das Anströmelement dient dazu, die in Richtung des Extruderaustritts fließende Schmelze auf vorgegebene Bereiche der Lochplatte zu lenken. Dazu umfasst das Anströmelement Durchtrittsflächen, durch die die Schmelze strömen kann, sowie Abdeckflächen, die verhindern, dass die Schmelze auf in Strömungsrichtung hinter den Abdeckflächen liegende Bereiche der Lochplatte strömt.

In einer vorteilhaften Ausgestaltung weist das Anströmelement einen Anströmkegel auf, dessen Grundfläche in Richtung der Lochplatte weist, und der sich entgegen der Strömungsrichtung der Schmelze konisch verjüngt. Der Begriff "Kegel" ist in diesem Zusammenhang nicht streng mathematisch zu verstehen. Im Sinne der Erfindung kann der Anströmkegel die Form eines Kegels, eines Kegelstumpfes oder eine andere sich entgegen der Strömungsrichtung der Schmelze verjüngende Form aufweisen. Die Grundfläche kann dabei beispielsweise kreisförmig, ellipsenförmig oder eckig sein. Ein derartiger Anströmkegel lenkt die anströmende Schmelze radial seitlich auf die Durchströmflächen und Abdeckflächen und kann somit zur gleichmäßigen Verteilung der Schmelze dienen.

Die Verschiebung des Anströmelements kann beispielsweise lateral oder rotatorisch erfolgen, solange dabei unterschiedliche Teilmengen von Löchern der Lochplatte freigegeben bzw. verschlossen werden. In einer weiteren bevorzugten Ausgestaltung weist das Anströmelement eine kreisförmige Querschnittsfläche auf, und die Verschiebung erfolgt durch Verdrehen um den Mittelpunkt der Querschnittsfläche. Abhängig von der Anzahl, Größe und Geometrie der Durchtritts- und Abdeckflächen sowie des für die Verdrehung vorgesehenen Winkels können Teilmengen von Löchern der Lochplatte komplett oder partiell freigegeben bzw. verschlossen werden.

Anzahl, Größe und Geometrie der Durchtrittsflächen sowie der Abdeckflächen können unterschiedlich gestaltet und den Erfordernissen und Gegebenheiten im konkreten Fall angepasst sein. In einer bevorzugten Ausgestaltung verlaufen die Abdeckflächen radial vom Zentrum des Anströmelements zu seinem Rand. Vorzugsweise werden die Abdeckflächen in radialer Richtung zum Rand hin in dem Maße breiter, wie sich der Umfang vom Zentrum zum Rand vergrößert. Weiterhin ist bevorzugt, dass die Abdeckflächen im Längsschnitt ein Profil aufweisen, das seine breiteste Ausdehnung an der der Lochplatte zugewandten Grundfläche hat und sich entgegen der Strömungsrichtung der Schmelze verjüngt. Ein derartiges Profil hat den Vorteil, dass auf die Abdeckfläche strömende Schmelze von der Abdeckfläche weg zu ihren Rändern und somit auf die benachbarten Durchtrittsflächen gelenkt wird.

In einer weiteren vorteilhaften Ausführungsform berühren die Abdeckflächen zumindest mit ihren Kanten die Lochplatte. Dadurch wird zum einen vermieden, dass ein Teil der Schmelze zwischen der Abdeckfläche und der Lochplattenoberfläche hindurch unter die Abdeckfläche gelangen kann, und somit die Schmelze nur durch die dafür vorgesehenen Durchtrittsflächen strömen kann. Zum anderen können bei einer derartigen Ausführungsform die Kanten der Abdeckflächen gleichsam als Abstreifer verwendet werden, um währen der Verschiebung gegebenenfalls an der Oberfläche der Lochplatte anhaftendes Material abzuschaben, wodurch einer vorzeitigen Verstopfung der Öffnungen in der Lochplatte vorgebeugt wird.

Die Verschiebung des Anströmelements kann manuell erfolgen, gegebenenfalls unter Zuhilfenahme von Werkzeugen wie Hebeln. Vorzugsweise erfolgt die Verschiebung unter Nutzung von Hilfsenergie, beispielsweise elektrischer, pneumatischer oder hydraulischer Hilfsenergie. Besonders bevorzugt erfolgt die Verschiebung des Anströmelements mit Hilfe eines Stellantriebs.

In einer vorteilhaften Ausgestaltung ist im oder am Gehäuse des Extruders mindestens ein Sensor vorhanden, der zur Erfassung einer Information über den Druck im Strömungskanal geeignet ist.

Aus der Information über den Druck im Strömungskanal lassen sich Informationen über den Verstopfungsgrad der in Betrieb befindlichen Durchströmfläche gewinnen.

In einer bevorzugten Ausführungsform werden diese Informationen mittels einer Einrichtung zur elektronischen Datenübertragung an eine Meldeeinrichtung übermittelt. Die Meldeeinrichtung kann sich in unmittelbarer Nähe des Extruders befinden, beispielsweise um optisch und/oder akustisch auf eine bevorstehende Verstopfung der Lochscheibe aufmerksam zu machen. Die Meldeeinrichtung kann aber auch räumlich entfernt vom Extruder sein, beispielsweise als optisch und/oder akustisch wahrnehmbare Anzeige in einem Prozessleitsystem.

In einer bevorzugten Ausführungsform weist der erfindungsgemäße Extruder einen Stellantrieb zum Verschieben des Anströmelements, mindestens einen Sensor zur Erfassung eines Druckes im Strömungskanal sowie ein Steuerungsmodul auf, wobei das Steuerungsmodul derart eingerichtet ist, dass bei Erreichen eines vorgegebenen kritischen Wertes für den Druck oder für eine Druckdifferenz das Anströmelement mit Hilfe des Stellantriebs verschoben wird.

In einer vorteilhaften Ausgestaltung ist der Sensor derart angeordnet und eingerichtet, dass der Absolutdruck im Strömungskanal bestimmt wird. In einer weiteren vorteilhaften Ausgestaltung sind mindestens zwei Sensoren vorgesehen, die derart angeordnet und eingerichtet sind, dass eine Druckdifferenz bestimmt wird. Der vorgegebene kritische Wert für den Druck oder für die Druckdifferenz wird vorzugsweise auf die jeweils behandelte Schmelze und die entsprechenden Prozessbedingungen abgestimmt. So kann beim Erfassen des Absolutdrucks als kritischer Wert beispielsweise ein Druck vorgegeben werden, der um einen bestimmten Betrag niedriger ist als der Druck, bei dem Sicherheitseinrichtungen wie ein Sicherheitsventil oder ein Abfahrventil ausgelöst werden.

Das Steuerungsmodul kann in bekannter Weise verwirklicht sein, beispielsweise als separater Mikrocontroller, integriert in den Stellantrieb oder als Baustein in einem Prozessleitsystem.

Gegenüber bekannten Vorrichtungen weist die erfindungsgemäße Vorrichtung den Vorteil auf, dass die Produktionszeit zwischen zwei zur Reinigung erforderlichen Abstellungen des Extruders signifikant verlängert wird. So kann beispielsweise bei einer Aufteilung der Abdeckflächen und der Durchtrittsflächen im gleichen Verhältnis die Laufzeit des Extruders verdoppelt werden, da nach Verschmutzung der ersten Teilmenge von Löchern der Lochplatte noch eine zweite Teilmenge mit sauberen Löchern zur Verfügung steht. Ein weiterer Vorteil besteht darin, dass die Teilmengen von Löchern unterschiedlich gestaltet werden können, sodass durch die Verschiebung des Anströmelements zwischen zwei unterschiedlichen Produktqualitäten bzw. zwischen unterschiedlichen Produktionsverfahren umgeschaltet werden kann. In jedem Fall wird durch die erfindungsgemäße Vorrichtung die Verfügbarkeit der Anlage signifikant erhöht, dadurch die Kapazität gesteigert und Materialverlust vermieden.

Die Erfindung wird im Folgenden mit Verweis auf die Zeichnungen näher erläutert. Die Zeichnungen sind als Prinzipdarstellungen zu verstehen. Sie stellen keine Beschränkung der Erfindung dar, beispielsweise im Hinblick auf konkrete Abmessungen oder Ausgestaltungsvarianten.

### Liste der verwendeten Bezugszeichen

- 1: Strömungskanal
- 2: Lochplatte
- 3: Anströmelement
- 4: Durchtrittsfläche(n)
- 5: Abdeckfläche(n)
- 6: Anströmkegel
- 7: Stellantrieb
- 8: Durchströmfläche(n) der Lochplatte
- 9: erste Platte
- 10: zweite Platte
- 11: Dichtung
- 12: Granulierwerkzeug

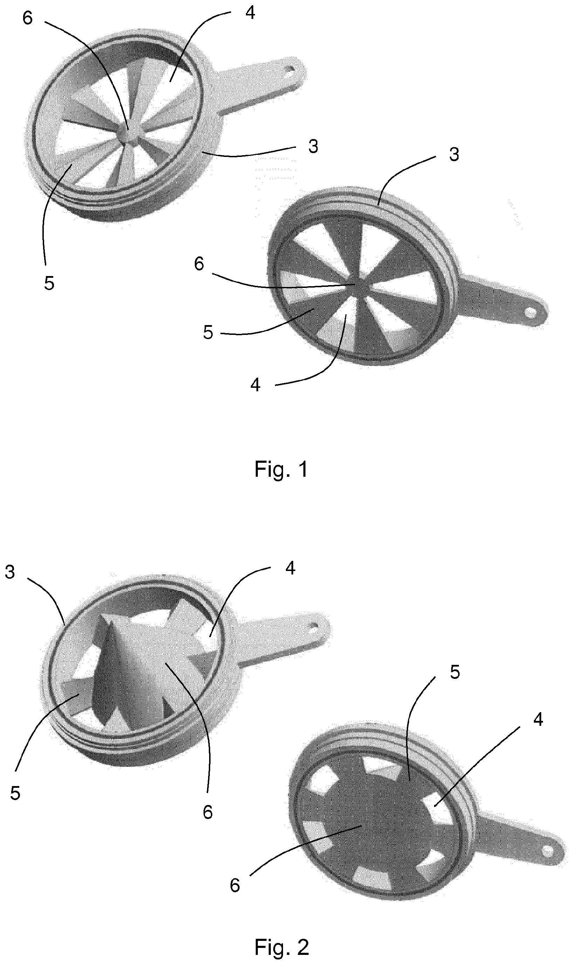

Fig. 1 zeigt eine erste bevorzugte Ausführungsform eines Anströmelements 3 für die Verwendung in einem Extruder. Die Darstellung links oben entspricht der Ansicht in Strömungsrichtung der Schmelze, die Darstellung rechts unten entspricht der Ansicht aus entgegengesetzter Richtung ausgehend von der Lochplatte. Das Anströmelement 3 hat eine kreisrunde Querschnittsfläche und weist einen Fortsatz an seinem Rand auf, der dazu vorgesehen ist, das Anströmelement 3 zu verschieben. In der Mitte der Querschnittsfläche befindet sich ein Anströmkegel 6, dessen Grundfläche in Richtung der Lochplatte weist, und der sich entgegen der Strömungsrichtung der Schmelze verjüngt. Ausgehend vom Anströmkegel 6, der sich im Zentrum des Anströmelements 3 befindet, verlaufen sechs Abdeckflächen 5 radial nach außen zum Rand des Anströmelements 3. Zwischen den Abdeckflächen 5 befinden sich offene Bereiche, die die Durchtrittsflächen 4 für die Schmelze bilden.

In dem dargestellten Beispiel werden die Abdeckflächen 5 in radialer Richtung zum Rand hin in dem Maße breiter, wie sich der Umfang vom Zentrum zum Rand vergrößert. Die Grundflächen der Abdeckflächen 5 sind so bemessen, dass sie den Durchtrittsflächen 4 entsprechen. Im Längsschnitt (senkrecht zur Querschnittsfläche) weisen die Abdeckflächen 5 ein Profil auf, das seine breiteste Ausdehnung an der der Lochplatte zugewandten Grundfläche hat und sich entgegen der Strömungsrichtung der Schmelze verjüngt. Auf das Anströmelement 3 treffende Schmelze wird somit zum einen durch die konische Form des Anströmkegels 6 vom Zentrum weg geleitet und zum anderen aufgrund der Formgebung der Abdeckflächen 5 von diesen weg zu den Rändern der Abdeckflächen 5 und somit auf die benachbarten Durchtrittsflächen 4 gelenkt.

In Fig. 2 ist eine weitere bevorzugte Ausführungsform eines Anströmelements 3 für die Verwendung in einem Extruder dargestellt. Diese Ausführungsform unterscheidet sich von der in Fig. 1 dargestellten lediglich in der geometrischen Gestaltung des Anströmkegels 6 und der Abdeckflächen 5. Der Anströmkegel 6 ist in seinem Durchmesser und in seiner axialen Ausdehnung deutlich größer als der der Ausführungsform gemäße Fig. 1. Entsprechend sind die Abdeckflächen 5 und die Durchtrittsflächen 4 deutlich kleiner. Ein Anströmelement 3 gemäß dieser Ausführungsform gibt daher eine signifikant kleinere Fläche der Lochplatte zur Durchströmung mit der Schmelze frei.

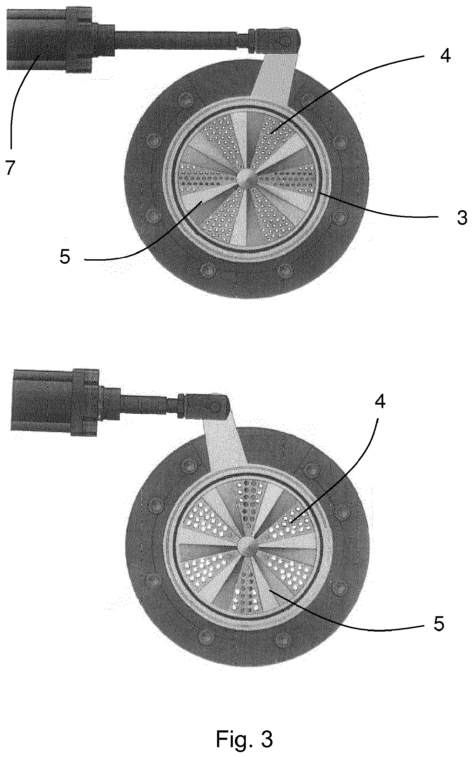

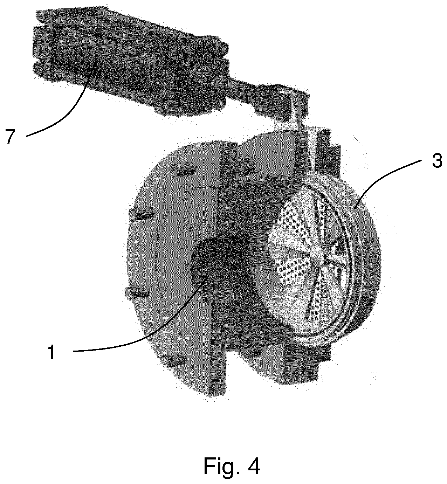

Fig. 3 zeigt eine Draufsicht auf ein in einem Extruder eingebautes Anströmelement 3 gemäß Ausführungsform der Fig. 1 in Strömungsrichtung der Schmelze betrachtet. Das Anströmelement 3 ist in einem Flansch drehbar gelagert. Zum Verschieben bzw. Verdrehen des Anströmelements 3 ist dieses mit einem Stellantrieb 7 verbunden. In Fig. 4 ist das in Fig. 1 und 3 erläuterte Anströmelement 3 im eingebauten Zustand teilfreigeschnitten dargestellt.

Die obere Abbildung in Fig. 3 zeigt das Anströmelement 3 in einer ersten Stellung, in der sich hinter den Durchtrittsflächen 4 Löcher der Lochplatte befinden, sodass eine erste Teilmenge von Löchern der Lochplatte freigegeben ist. Eine zweite Teilmenge von Löchern der Lochplatte befindet sich hinter den Abdeckflächen 5 und ist somit verschlossen. In der unteren Abbildung in Fig. 3 ist das Anströmelement 3 gegenüber der Stellung in der oberen Abbildung um 30° im Gegenuhrzeigersinn verdreht. Die zuvor offenen Löcher der Lochplatte sind nun durch die Abdeckflächen 5 verdeckt, während die zuvor verdeckten Löcher nun von der Schmelze durchflossen werden können.

In dem dargestellten Beispiel sind die Löcher der Lochplatte in den beiden Teilmengen unterschiedlich ausgeführt. In der Teilmenge von Löchern, die in der oberen Darstellung offen ist, sind viele kleine Löcher angeordnet. Dagegen sind in der Teilmenge von Löchern, die in der unteren Darstellung offen ist, weniger, aber größere Löcher angeordnet. Die erfindungsgemäße Vorrichtung ermöglicht es, zwischen den beiden Lochgrößen umzuschalten, ohne dabei den Schmelzefluss im Extruder anzuhalten, also den Extruder abzufahren. Dadurch kann ohne Laufzeiteinbußen flexibel zwischen Fahrweisen umgeschaltet werden.

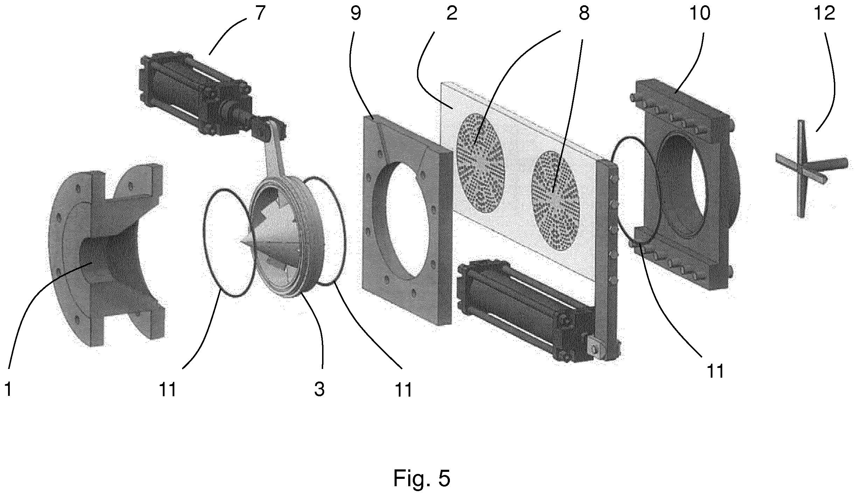

In Fig. 5 ist schematisch in Explosionsdarstellung eine bevorzugte Ausführungsform der Erfindung wiedergegeben. Von dem Extruder ist lediglich der Extruderaustritt dargestellt. Die Strömungsrichtung der Schmelze verläuft von links nach rechts. An dem austrittsseitigen Ende des Extruders ist eine erste Platte 9 und eine zweite Platte 10 angeflanscht und fest mit dem Extruder verbunden.

Die zweite Platte 10 weist zwischen dem oberen und dem unteren Ende im Inneren eine Aussparung auf, in der eine Lochplatte 2 verschiebbar gelagert ist. Die Lochplatte 2 umfasst zwei Durchströmflächen 8, die beide eine Vielzahl an Durchströmöffnungen enthalten. Die äußere Kontur der Durchströmflächen 8 (Einhüllende um die Durchströmöffnungen) ist jeweils kreisrund und entspricht in ihrem Querschnitt dem Innenquerschnitt des Strömungskanals 1 an dieser Stelle. Zum Verschieben der Lochplatte 2 ist ein Stellantrieb vorgesehen, der über eine Linearbewegung die Lochplatte im Wesentlichen senkrecht zum Strömungskanal 1 verschieben kann.

Zwischen dem Extruderaustritt und der ersten Platte 9 ist ein Anströmelement 3 angeordnet, das mit Hilfe eines Stellantriebs 7 um einen vorgegebenen Winkel verdreht werden kann. In diesem Beispiel entspricht das Anströmelement 3 dem in Fig. 2 dargestellten. Um einen Austritt der Schmelze an unerwünschter Stelle zu vermeiden, sind Dichtelemente 11 zwischen Extruderaustritt, Anströmelement 3, Lochplatte 2 und zweiter Platte 10 vorgesehen. Am austrittsseitigen Ende der Vorrichtung ist ein Granulierwerkzeug 12 vorgesehen, das an der Lochplatte 2 anliegt und durch eine Drehbewegung die durch die Durchströmöffnungen austretende Schmelzstränge in kleinteiliges Granulat zerschneidet.

## Patentansprüche

1. Extruder umfassend ein Gehäuse mit einem Strömungskanal (1) für eine Schmelze sowie eine den Strömungskanal (1) austrittsseitig begrenzende Lochplatte (2), wobei in Strömungsrichtung der Schmelze vor der Lochplatte (2) ein Anströmelement (3) mit Durchtrittsflächen (4) und Abdeckflächen (5) derart verschiebbar angeordnet ist, dass bei einer Verschiebung des Anströmelements (3) eine erste Teilmenge von Löchern der Lochplatte (2) freigegeben und eine zweite Teilmenge von Löchern der Lochplatte (2) verschlossen werden, **dadurch gekennzeichnet, dass** das Anströmelement (3) einen Anströmkegel (6) aufweist, dessen Grundfläche in Richtung der Lochplatte (2) weist, und der sich entgegen der Strömungsrichtung der Schmelze konisch verjüngt.

2. Extruder nach Anspruch 1, wobei das Anströmelement (3) eine kreisförmige Querschnittsfläche aufweist, und die Verschiebung durch Verdrehen um den Mittelpunkt der Querschnittsfläche erfolgt.

3. Extruder nach Anspruch 1, wobei die Abdeckflächen (5) radial vom Zentrum des Anströmelements (3) zu seinem Rand verlaufen.

4. Extruder nach Anspruch 3, wobei die Abdeckflächen (5) im Längsschnitt ein Profil aufweisen, das seine breiteste Ausdehnung an der der Lochplatte (2) zugewandten Grundfläche hat und sich entgegen der Strömungsrichtung der Schmelze verjüngt.

5. Extruder nach Anspruch 3 oder 4, wobei das Anströmelement (3) einen Anströmkegel (6) aufweist, dessen Grundfläche in Richtung der Lochplatte (2) weist, und der sich entgegen der Strömungsrichtung der Schmelze konisch verjüngt.

6. Extruder nach Anspruch 3 oder 4, wobei das Anströmelement (3) eine kreisförmige Querschnittsfläche aufweist, und die Verschiebung durch Verdrehen um den Mittelpunkt der Querschnittsfläche erfolgt.

7. Extruder nach einem der Ansprüche 1 bis 6, wobei die Abdeckflächen (5) zumindest mit ihren Kanten die Lochplatte (2) berühren.

8. Extruder nach einem der Ansprüche 1 bis 7, der weiterhin einen Stellantrieb (7) zum Verschieben des Anströmelements (3), mindestens einen Sensor zur Erfassung eines Druckes im Strömungskanal (1) sowie ein Steuerungsmodul aufweist, wobei das Steuerungsmodul derart eingerichtet ist, dass bei Erreichen eines vorgegebenen kritischen Wertes für den Druck oder für eine Druckdifferenz das Anströmelement (3) mit Hilfe des Stellantriebs (7) verschoben wird.

## Claims

1. An extruder comprising a housing having a flow channel (1) for a melt and a perforated plate (2) delimiting the flow channel (1) on the outlet side, where an inlet flow element (3) having passage areas (4) and covering surfaces (5) is arranged so as to be movable ahead of the perforated plate (2) in the direction of flow of the melt in such a way that, when the inlet flow element (3) is moved, a first subset of holes in the perforated plate (2) is exposed and a second subset of holes in the perforated plate (2) is closed, wherein the inlet flow element (3) has an inlet flow cone (6), the base of which faces in the direction of the perforated plate (2) and which tapers conically counter to the direction of flow of the melt.

2. The extruder according to claim 1, wherein the inlet flow element (3) has a circular cross-sectional area, and the movement is accomplished by rotation about the center of the cross-sectional area.

3. The extruder according to claim 1, wherein the covering surfaces (5) extend radially from the center of the inlet flow element (3) to the rim thereof.

4. The extruder according to claim 3, wherein the covering surfaces (5) have a profile in longitudinal section which has its widest extent at the base facing the perforated plate (2) and tapers counter to the direction of flow of the melt.

5. The extruder according to claim 3 or 4, wherein the inlet flow element (3) has an inlet flow cone (6), the base of which faces in the direction of the perforated plate (2) and which tapers conically counter to the direction of flow of the melt.

6. The extruder according to claim 3 or 4, wherein the inlet flow element (3) has a circular cross-sectional area, and the movement is accomplished by rotation about the center of the cross-sectional area.

7. The extruder according to one of claims 1 to 6, wherein the covering surfaces (5) are in contact with the perforated plate (2) at least with their edges.

8. The extruder according to one of claims 1 to 7, which furthermore has an actuator (7) for moving the inlet flow element (3), at least one sensor for detecting a pressure in the flow channel (1) and a control module, wherein the control module is designed in such a way that the inlet flow element (3) is moved with the aid of the actuator (7) when a predetermined critical value for the pressure or for a pressure difference is reached.

## Revendications

1. Extrudeuse comprenant un boîtier avec un canal d'écoulement (1) pour une matière en fusion ainsi qu'une plaque perforée (2) délimitant le canal d'écoulement (1) du côté de la sortie, un élément d'afflux (3) avec des surfaces de passage (4) et des surfaces de recouvrement (5) étant disposé de manière à pouvoir se déplacer dans la direction d'écoulement de la matière en fusion avant la plaque perforée (2) de telle sorte que dans le cas d'un déplacement de l'élément d'afflux (3), une première quantité partielle des trous de la plaque perforée (2) soit libérée et une deuxième quantité partielle des trous de la plaque perforée (2) soit fermée, **caractérisée en ce que** l'élément d'afflux (3) présente un cône d'afflux (6) dont la surface de base est tournée dans la direction de la plaque perforée (2), et qui se rétrécit de manière conique dans le sens opposé à la direction d'écoulement de la matière en fusion.

2. Extrudeuse selon la revendication 1, dans laquelle l'élément d'afflux (3) présente une surface en section transversale circulaire, et le déplacement s'effectue par rotation autour du centre de la surface en section transversale.

3. Extrudeuse selon la revendication 1, dans laquelle les surfaces de recouvrement (5) s'étendent radialement depuis le centre de l'élément d'afflux (3) vers son bord.

4. Extrudeuse selon la revendication 3, dans laquelle les surfaces de recouvrement (5) présentent, en coupe longitudinale, un profil qui présente son étendue la plus large au niveau de la surface de base tournée vers la plaque perforée (2) et qui se rétrécit dans le sens opposé à la direction d'écoulement de la matière en fusion.

5. Extrudeuse selon la revendication 3 ou 4, dans laquelle l'élément d'afflux (3) présente un cône d'afflux (6) dont la surface de base est tournée dans la direction de la plaque perforée (2) et qui se rétrécit de manière conique dans le sens opposé à la direction d'écoulement de la matière en fusion.

6. Extrudeuse selon la revendication 3 ou 4, dans laquelle l'élément d'afflux (3) présente une surface en section transversale circulaire et le déplacement s'effectue par rotation autour du centre de la surface en section transversale.

7. Extrudeuse selon l'une quelconque des revendications 1 à 6, dans laquelle les surfaces de recouvrement (5) viennent en contact avec la plaque perforée (2) au moins avec leurs bords.

8. Extrudeuse selon l'une quelconque des revendications 1 à 7, qui présente en outre un entraînement de commande (7) pour déplacer l'élément d'afflux (3), au moins un capteur pour détecter la pression dans le canal d'écoulement (1) ainsi qu'un module de commande, le module de commande étant conçu de telle sorte qu'à l'obtention d'une valeur critique prédéfinie de la pression ou d'une différence de pression, l'élément d'afflux (3) soit déplacé à l'aide de l'entraînement de commande (7).
